# EUROPEAN PATENT SPECIFICATION

(11) **EP 4 106 152 B1**
(45) Date of publication and mention of the grant of the patent: **09.12.2026**
(21) Application number: 21305836.5
(22) Date of filing: 17.06.2021
(51) Int. Cl.: H02K 3/24, H02K 3/34, H02K 3/487, H02K 9/04, H02K 9/10, H02K 1/32

(54) **MAGNETIC MASS FOR A ROTOR, ASSOCIATED ROTOR AND ROTATING ELECTRIC MACHINE**
MAGNETISCHE MASSE FÜR EINEN ROTOR, ZUGEHÖRIGER ROTOR UND ROTIERENDE ELEKTRISCHE MASCHINE
MASSE MAGNÉTIQUE POUR ROTOR, ROTOR ASSOCIÉ ET MACHINE TOURNANTE ÉLECTRIQUE

(43) Date of publication of application: 21.12.2022
(73) Proprietor: GE Energy Power Conversion Technology Limited, Rugby, Warwickshire CV21 1BD (GB)
(72) Inventor: DURANTAY, Lionel, 54250 Champigneulles (FR); GROSSELIN, Christophe, 54250 Champigneulles (FR); ROMAIN, Dominique, 54250 Champigneulles (FR); ADAM, Grégoire, 54250 Champigneulles (FR)
(74) Representative: Casalonga

(56) References cited:
- EP-A1- 2 852 032
- CH-A- 172 839
- CH-A- 180 501
- GB-A- 720 295
- US-A- 4 282 450
- US-B1- 6 844 637

## Description

The present invention concerns rotary electric machines having a rotor and relates more particularly to a cooling arrangement with cooling fluid flowing through corresponding cooling passages in the rotor.

To ensure trouble-free operation and to utilize the full output potential of a rotary electric machine, the rotary electric machine must be cooled in order to dissipate the heat loss which occurs in the windings and cores of the rotor and stator.

Fluid such as air or even hydrogen is generally used for the cooling and is fed through corresponding bores or slits in the rotor and stator and then cooled down again in a cooler.

Documents EP 1 455 433, US 2019/0260268, US 2010/0283335 and US 4,709,177 disclose a rotor in which the cooling medium flows axially from the ends of the rotor into corresponding bores in the rotor conductors toward the inside, issues radially into the air gap between stator and rotor after absorbing the rotor heat loss.

Documents US 2006/0279145 and EP 2 120 314 disclose a rotor in which cooling medium flows radially through bores in the rotor conductors.

Document US 2015/0162804 discloses a rotor comprising a plurality of conductors radially stacked within each of the axial slots. The conductors are arranged in each slot to define a cooling path.

Document US 2002/0074869 discloses an electric rotating machine comprising axially extending windings and concentric end windings, and a plurality of space blocks located between adjacent end windings thereby to define a plurality of cavities. Coolant flows towards a central region of the respective cavity to cool the rotor. Documents US4282450 A, EP2852032 A1, CH172839 A, CH180501 A, disclose a rotor slot that houses at least one separator extending in the radial direction and two concentric windings separated by the separator in a circumferential direction, the separator being configured to channel a cooling fluid in the said slot to cool the concentric windings, and a wedge configured so that cooling fluid escapes the separator through the wedge and to prevent the concentric windings and the separator from moving in the slot.

However, the achievement of bores in the rotor conductors, stacking conductors to define cooling paths and assembling space blocks between end windings are complex operations which are time consuming.

It is therefore proposed to remedy the disadvantages related to cooling schemes for a rotor according to the prior art with an improved cooling scheme of the rotor windings easy to implement.

In view of the foregoing the invention proposes a magnetic mass for rotor which comprises slots disposed on a diameter of the magnetic mass, extending along the magnetic mass in an axial direction and merging outwards in a radial direction, each slot being closed by a wedge.

Each slot houses at least one separator extending in the radial direction and two concentric windings separated by the separator in a circumferential direction, the separator being configured to channel a cooling fluid in the said slot to cool the concentric windings, the wedge being configured so that cooling fluid escapes the separator through the wedge and to prevent the concentric windings and the separator from moving in the slot.

Advantageously, the separator is made of an electric insulating material.

The separator comprises an end-part at each end of the magnetic mass and at least one intermediate part between the two end-parts, each end-part and the intermediate part comprising a bottom part and cooling parts,
- the bottom part resting at the bottom of the slot and comprising a sub-supply channel,
- each cooling part comprising at least one extraction duct in the radial direction at a first end of the cooling part and a cooling channel extending in an axial direction between the extraction duct and the second end of the cooling part, the cooling channel being supplied with cooling fluid at the second end of the cooling part,
- the cooling parts of the intermediate part further comprising a supply duct at the second end of the cooling part supplying the cooling channel,
the cooling parts of each end-part and of each intermediate part being stacked above the bottom part and on top of each other in the radial direction so that the extraction ducts form a extraction vent, the supply ducts of the intermediate part form an supply vent and the sub-supply channels form a supply channel extending along the magnetic mass in the axial direction and configured to supply the supply vents with cooling fluid, the extraction vents being configured to extract the cooling fluid outside the cooling channels through the wedge.

Advantageously, each wedge comprises holes in front of the extraction vents so that cooling fluid flows outside of the magnetic mass through the extraction vents and the holes.

Preferably, two intermediate parts between the two end-parts, the extraction vent of a first intermediate part being adjacent to the supply vent of the second intermediate part.

Advantageously, the length in the axial direction of the first intermediate part and the length in the axial direction of the second intermediate part are not identical.

Preferably, the bottom part and each cooling part are unitary parts fixed together with fixing means.

Advantageously, the fixing means comprise lugs and fixing apertures configured to house lugs, each end of the bottom part comprising a fixing aperture and each cooling part comprising at each end on a first surface lugs and at each end on the second surface opposite to the first surface fixing apertures, the lugs of one cooling part cooperating with the fixing aperture of the adjacent cooling part or of the adjacent bottom part.

Preferably, each cooling part is formed by two distant parallel surfaces in the axial direction joined by staggered beams.

Advantageously, each bottom part comprises a groove, the bottom part resting at the bottom of the slot so that the groove and the bottom of the slot form the sub-supply channel.

Another object of the invention relates to a rotor for a rotating electric machine comprising a shaft, and a magnetic mass as defined above and mounted on the shaft, the two concentric winding heads of the two concentric windings extending outside the magnetic mass so that a gap is formed between the winding heads and the shaft, the rotor further comprising supporting means for supporting the winding heads, the two concentric winding heads and the supporting means forming a winding head cooling channel between the two concentric winding heads, the surface of the winding head cooling channel opposite to the shaft being hermetically sealed, each winding head cooling channel supplying one separator with cooling fluid.

Advantageously, each winding head cooling channel supplies the cooling channels and the sub-supply of one end-part.

Preferably, the supporting means comprise a retaining ring and compensation means, the retaining ring surrounding each winding head cooling channel and the compensation means being disposed between the retaining ring and each winding head so that the surface of the winding head cooling channel opposite to the shaft is hermetically sealed.

Advantageously, the supporting means comprise a cross beam and a retaining bandage, the cross beam being disposed between the winding heads and the shaft to support the winding heads and the retaining bandage surrounding the winding heads so that the surface of the winding head cooling channel opposite to the shaft is hermetically sealed.

Another object of the invention relates to a rotating electric machine comprising a rotor as defined above.

Other characteristics and advantages of the invention will emerge on reading the following description of embodiments of the invention, provided solely by way of non-limiting examples and with reference to the drawings in which:
Figure 1 illustrates an embodiment of a rotary electrical machine,
Figure 2 illustrates an embodiment of a rotor,
Figure 3 illustrates an axial section in the middle of the magnetic mass,
Figure 4 illustrates an example of two concentric windings,
Figure 5 illustrates a partial section of the magnetic mass,
Figures 6, 7 and 8 represents different views of an embodiment of the intermediate part,
Figures 9 illustrates a section of the cooling part according to the axial direction of the separator,
Figures 10 illustrates a partial view of the rotor, and
Figure 11 illustrates an embodiment of a cross beam, and
Figures 12 illustrates an embodiment of a method to assemble the concentric windings in the magnetic mass.

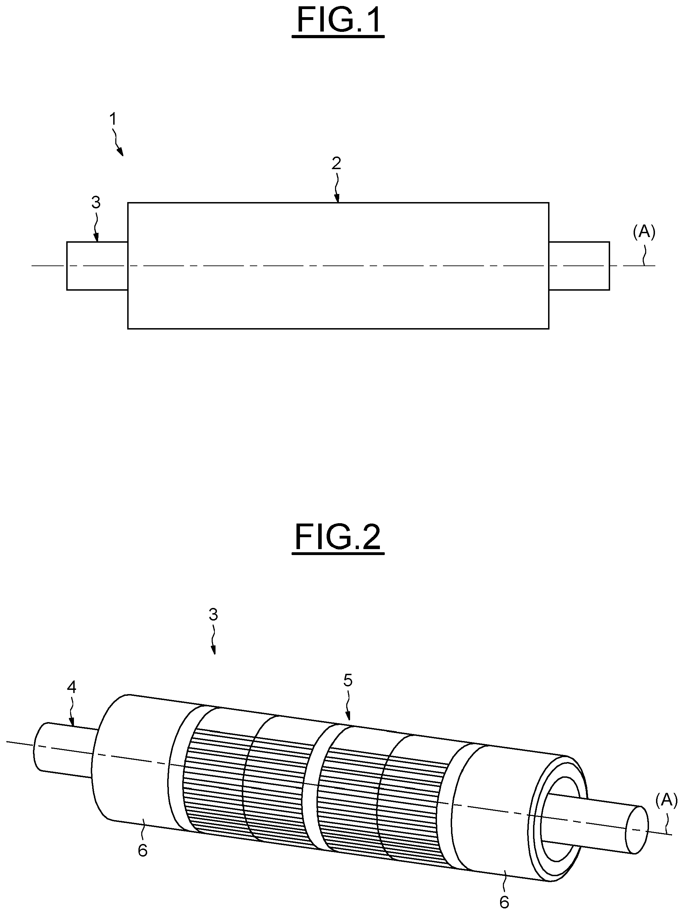

Figure 1 illustrates an embodiment of a rotary electrical machine 1 comprising a stator 2 and a rotor 3 inserted into the stator 2.

The rotor 3 is a wounded rotor comprising windings and comprises an axis (A) coincident with the axis of rotation of the rotor 3.

The rotary electrical machine 1 is for example a wounded synchronous electrical machine or a wounded asynchronous electrical machine.

Figure 2 illustrates an embodiment of the rotor 3.

The rotor 3 comprises a shaft 4, a magnetic mass 5 mounted on the shaft 4 and supporting means for supporting the winding head.

The rotor 3 is for example a 2 poles rotor.

In another embodiment, the rotor 3 may comprise more than 2 poles.

The supporting means comprise a retaining ring 6 and compensation means.

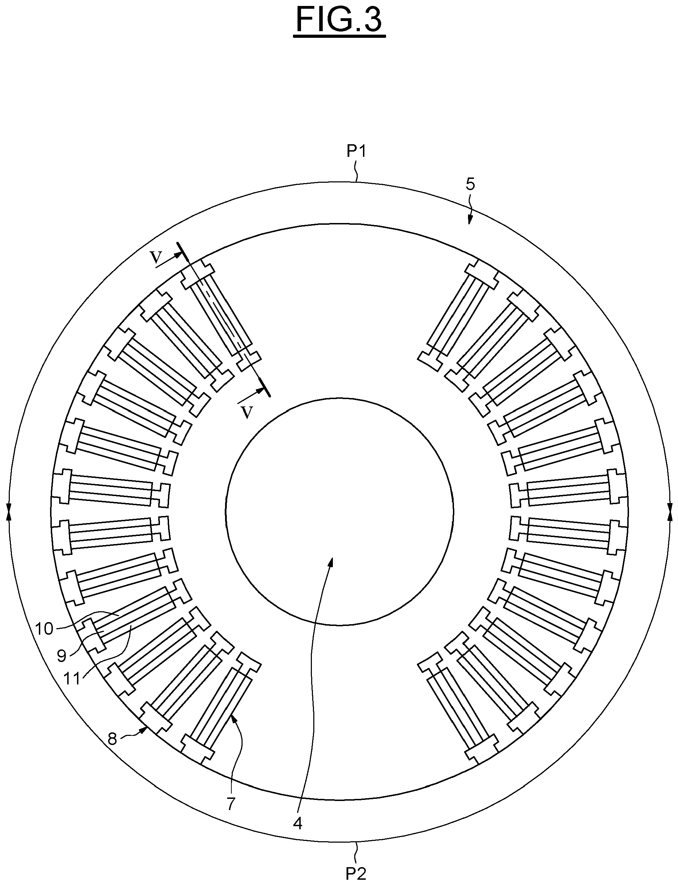

Figure 3 illustrates an axial section in the middle of the magnetic mass 5.

The magnetic mass 5 comprises slots 7 disposed on a diameter of the magnetic mass 5 and extending along the magnetic mass 5 in an axial direction coincident with the axis (A) and merging outwards in a radial direction perpendicular to the axis (A).

The slot 7 are arranged to form a first pole P1 and a second pole P2.

Each slot 7 is closed by a wedge 8.

Each slot 7 houses a separator 9 extending in the radial direction and two concentric windings 10, 11 separated by the separator 9 in a circumferential direction.

The separator 9 is configured to channel a cooling fluid in the slot 7 to cool the concentric windings 10, 11.

The wedge 8 is configured so that cooling fluid escapes the separator 9 through the wedge 8.

The separator 9 is made of an electric insulating material for example thermoplastic.

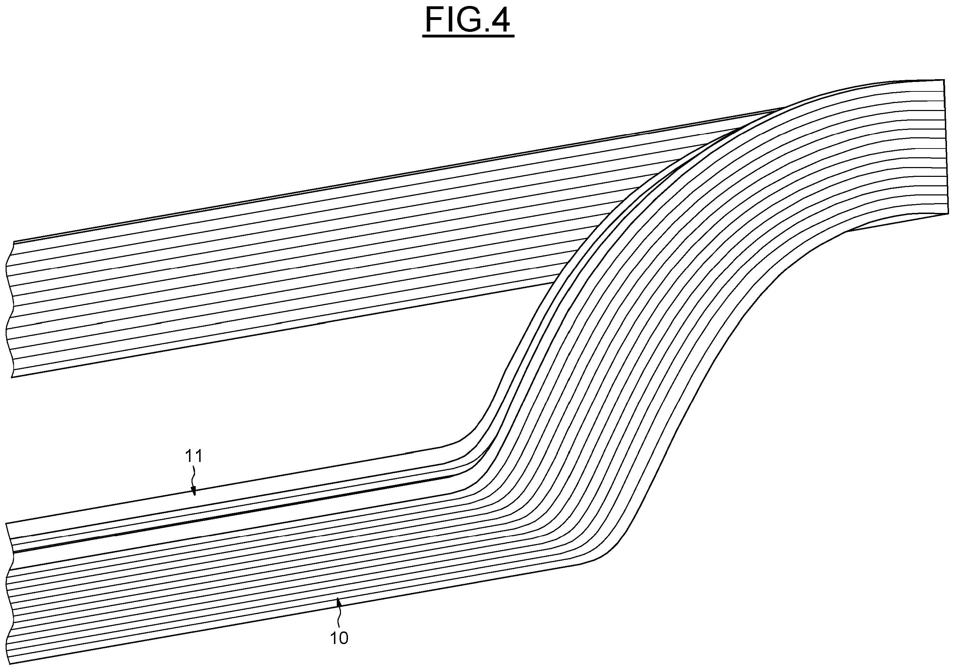

Figure 4 illustrates an example of the two concentric windings 10, 11.

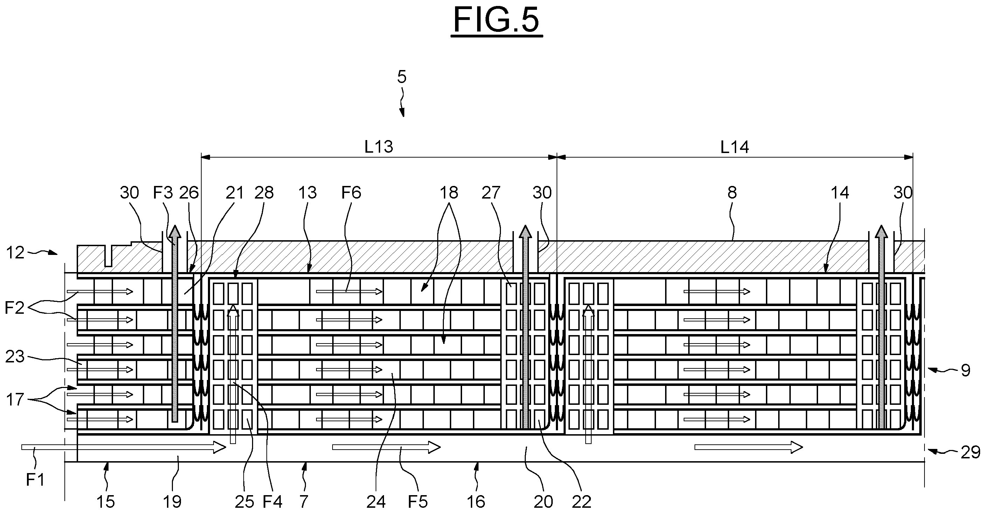

Figure 5 illustrates a partial section of the magnetic mass 5 according to the direction V-V on figure 3.

The separator 9 comprises an end-part 12 at each end of the magnetic mass and intermediate parts 13, 14 between the two end-parts 12.

Each end-part 12 and intermediate part 13, 14 is in contact with at least one adjacent end-part or intermediate part.

The intermediate parts 13, 14 may have the same length L13, L14 in the axial direction or may have a different length L13, L14.

It is assumed that the intermediate parts 13, 14 have the same length L13, L14 and are identical.

The separator 9 may comprise at least one intermediate part or more than two intermediate parts.

As the two intermediate parts 13, 14 are identical, only the intermediate part 13 is detailed in the following.

Each end-part 12 and each intermediate part 13 comprise a bottom part 15, 16 and cooling parts 17, 18.

The bottom part 15, 16 rests at the bottom of the slot 7 and comprises a sub-supply channel 19, 20.

Each cooling part 17, 18 comprises one extraction duct 21, 22 in the radial direction at a first end of the cooling part 17, 18 and a cooling channel 23, 24 extending in an axial direction between the extraction duct 21, 22 and the second end of the cooling part 17, 18.

The cooling channel 23, 24 is supplied with cooling fluid at the second end of the cooling part 17, 18.

The cooling fluid may be air or another gas, for example nitrogen.

The cooling parts 18 of the intermediate part further comprise a supply duct 25 at the second end of the cooling part supplying the cooling channel 24 with cooling fluid.

The cooling parts 17, 18 of each end-part 12 and of each intermediate part 13, 14 are stacked above the bottom part 15, 16 and on top of each other in the radial direction so that the extraction ducts 21, 22 form an extraction vent 26, 27, the supply ducts 25 of the intermediate part 13 form a supply vent 28, and the sub-supply channels 19, 20 form a supply channel 29 extending along the magnetic mass 5 in the axial direction and supplying the supply vents 28 with cooling fluid.

The extraction vents 26, 27 extract the cooling fluid outside the cooling channels 23, 24 through the wedge 8 comprising holes 30 in front of the extraction vents 26, 27 so that cooling fluid flows outside of the magnetic mass 5 through the extraction vents 26, 27 and the holes 30.

The extraction vent 27 of a first intermediate part 13 is adjacent to the supply vent of the second intermediate part 14.

The extraction vent 26 of the end-part 12 is adjacent to the intermediate part 13.

Cooled cooling fluid flows in the cooling channels 23 and the sub-supply channel 19 of each end-part 12 (arrows F1, F2).

The cooling fluid is cooled for example by a cooling device located outside the rotor 3.

The cooling fluid flowing in the cooling channels 23 cools the two concentric windings 10, 11 and the heated cooling fluid escape the slot 7 through the extraction vent 26 of the end-part 12 (arrow F3).

A part of the cooling fluid flowing in the sub-supply channel 19 flows in the supply vent 28 of the intermediate part 13 (arrowF4) and another part flows in the sub-supply channel 20 of the intermediate part 13 (arrow F5) to supply the supply vent of the second intermediate part 14 with cooled cooling fluid.

The cooling fluid flowing in the supply event 28 of the intermediate part 13 flows in the channels 14 (arrow F6) to cool the two concentric windings 10, 11 and the heated cooling fluid escape the slot 7 through the extraction vent 27 of the intermediate part 13 (arrow F7).

The end-parts 12 and the intermediate parts 13, 14 cool the concentric windings 10, 11 along the length of the windings 10, 11 inserted in the magnetic mass 5.

The design of the end-part 12 is different from the intermediate part 13 in that the cooling parts 17 of the end-part 12 does not comprise supply ducts, the cooling fluid flowing from outside the separator in the supply channels 23 of the end-part 10.

As the design of the end-part 12 and the intermediate part 13 are similar, only the intermediate part 13 is detailed in the following.

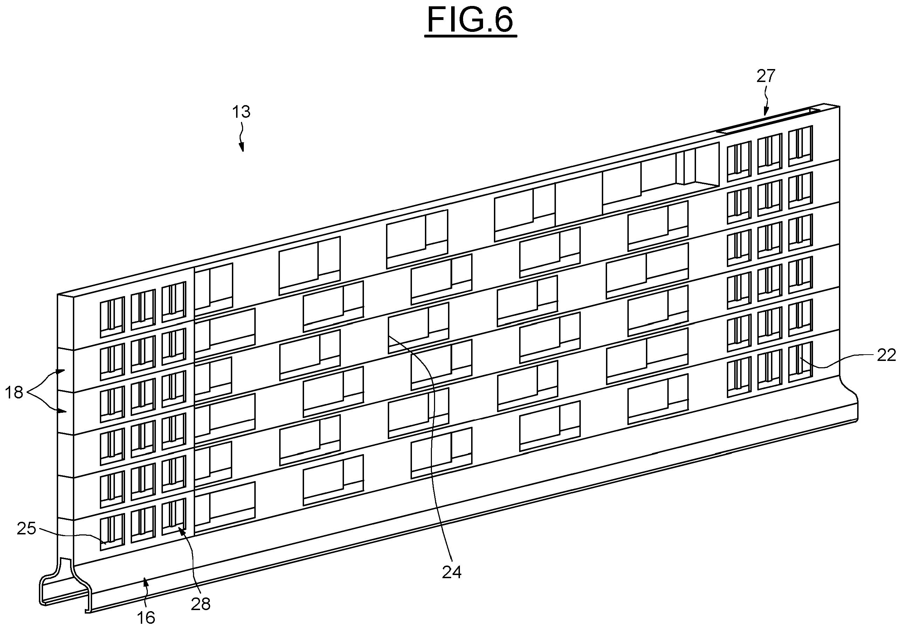

Figures 6, 7 and 8 represents different views of an embodiment of the intermediate part 13.

The bottom part 16 further comprises a groove 31.

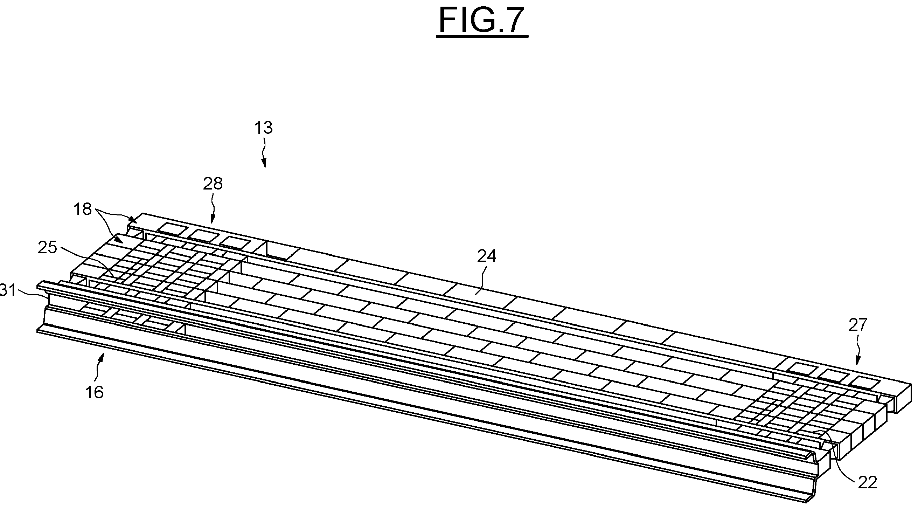

The groove 31 resting at the bottom of the slot 7 and the bottom of the slot 7 form the sub-supply channel 20 (figure 7).

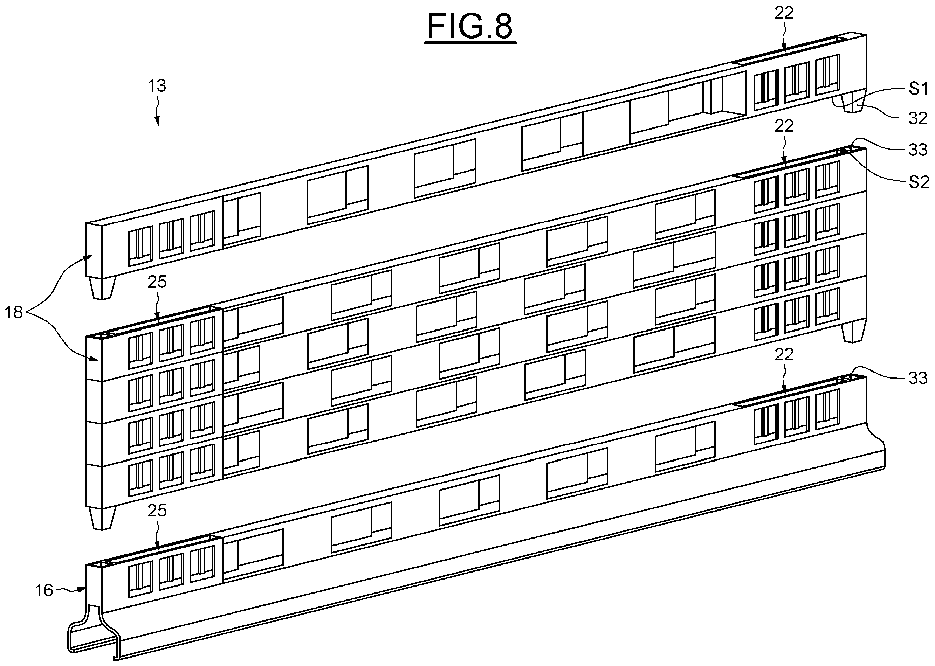

As represented on figure 8, the bottom part 16 and each cooling part 18 of the intermediate part 13 may be unitary parts fixed together with fixing means.

The fixing means may comprise lugs 32 and fixing apertures 33 to house lugs 32.

Each end of the bottom part 16 comprises fixing aperture 33 and each cooling part 18 comprises at each end on a first surface S1 lugs 32 and at each end on the second surface S2 opposite to the first surface S1 fixing apertures 33.

The lugs 32 of one cooling part 18 cooperates with the fixing aperture 33 of the adjacent cooling part 18 or of the adjacent bottom part 16.

The intermediate part 13 and the end-part 12 may be mounted in the slot 7 by assembling easily the bottom part and the cooling parts.

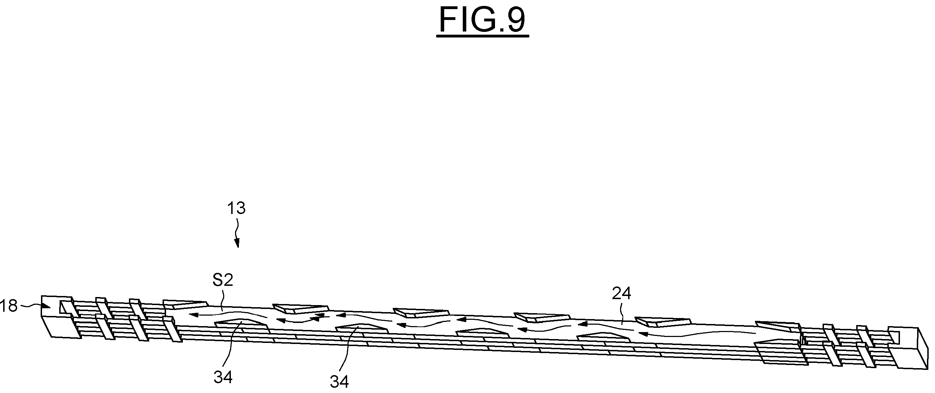

Figure 9 represents a section of the cooling part 18 according to the axial direction of the separator 9.

The cooling part 18 may be formed by the two distant parallel surfaces S1, S2 in the axial direction joined by staggered beams 34.

The beams 34 are design to optimize the heat exchange between the cooling fluid flowing in the cooling channel 24 and the windings 10, 11.

The cooling parts and the bottom parts may be obtained for example by moulding, 3D printing or other manufacturing process.

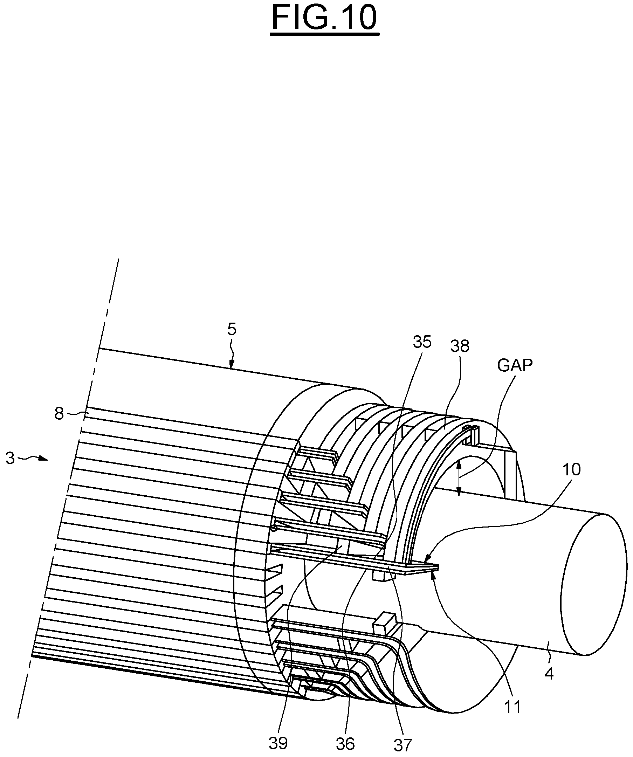

Figure 10 illustrates a partial view of the rotor 3 as illustrated on figure 2 without the retaining rings 6 and without two pairs of concentric windings.

The concentric winding heads 35, 36 of the two concentric windings 10, 11 extend outside the magnetic mass 5 so that a gap GAP is formed between the winding heads 35, 36 and the shaft 4.

The two concentric winding heads 35, 36 and the retaining ring 6 (not represented) form a winding head cooling channel 37 between the two concentric winding heads 35, 36.

The compensation means 38 are disposed between the retaining ring 6 and each winding head 35, 36 so that the surface of the winding head cooling channel 37 opposite to the shaft 4 is hermetically sealed.

The compensation means 38 compensate a gap between the winding heads 35, 36 and the retaining ring 6

The compensation means 38 may for example comprise an insulated composite.

The winding heads of another pair of concentric windings are separated from the winding heads 35, 36 by separating wedges 39.

Cooling fluid is sucked in the winding head cooling channel 37 when the rotor 3 is rotating, cools the winding heads 35, 36 and supplies the cooling channels and the sub-supply of one end-part 12.

The retaining ring 6 is for example made of stainless steel.

The rotor 3 is particularly adapted for rotating speed above 3000 rpm.

In another embodiment, if the rotating speed of the rotor 3 is below 3000 rpm, the supporting means may comprise a cross beam 6a and a retaining bandage.

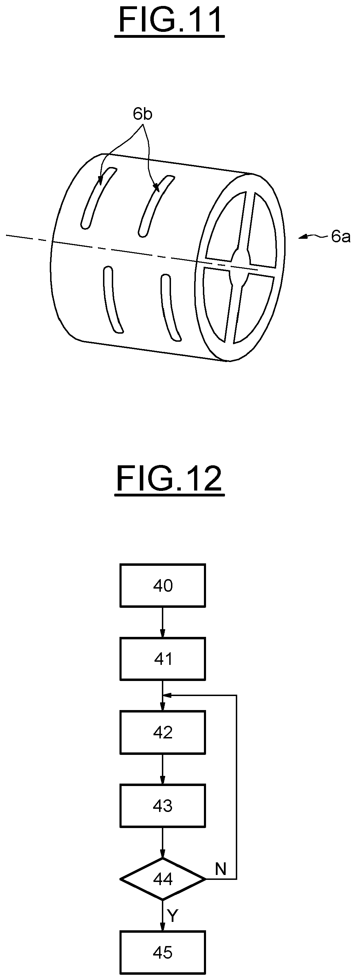

Figure 11 illustrates an example of a cross beam 6a comprising apertures 6b.

The cross beam 6a is made for example of composite material.

The cross beam 6a is disposed between the winding heads 35, 36 and the shaft 4 to support the winding heads and the retaining bandage surrounds the winding heads 35, 36 so that the surface of the winding head cooling channel opposite to the shaft is hermetically sealed so that the cooling fluid flows in the apertures 6b and supplies the cooling channels and the sub-supply of one end-part 12.

Figure 12 illustrates an embodiment of a method to assemble the concentric windings 10, 11 in the magnetic mass 5.

In a step 40, the bottom parts 15, 16 of the end-parts 12 and the intermediate parts 13, 14 are laid on the bottom of the slot 7 to form the sub-supply channels 19, 20.

In step 41, coils of the two concentric windings 10, 11 are inserted until the height of the coils in the radial direction reach the heigh of the bottom part.

Then the height of the inserted coils has reached the height of the bottom parts 15, 16, in step 42, first cooling parts 17, 18 are stacked on the bottom parts 15, 16.

In step 43, coils are inserted in the slot until the height of the coils reach the height of the cooling parts 17, 18.

Steps 42 and 43 are repeated until the slot 7 is filled up with the windings 10, 11 (step 44).

When the slot 7 is filled up (step 44), in step 45, the wedge 8 is inserted in the magnetic mass 5 to close the slot 7.

The use of two concentric windings separated by a separator permits to cool efficiently the windings and the winding heads in order to increase the efficiency of the rotating machine 1 without drilling the winding conductors reducing the duration of manufacturing the windings.

Further, as the separator is made of unitary parts fixed together, the mounting of the winding coils and the separator in the slot 7 of the magnetic mass 5 is convenient so that the assembly duration of the rotor 3 is reduced.

## Claims

1. Magnetic mass (5) for rotor (3) which comprises slots (7) disposed on a diameter of the magnetic mass, extending along the magnetic mass in an axial direction and merging outwards in a radial direction, each slot being closed by a wedge (8), each slot housing at least one separator (9) extending in the radial direction and two concentric windings (10, 11) separated by the separator in a circumferential direction, the separator being configured to channel a cooling fluid in the said slot to cool the concentric windings, the wedge being configured so that cooling fluid escapes the separator through the wedge and to prevent the concentric windings and the separator from moving in the slot, **characterized in that** the separator (9) comprises an end-part (12) at each end of the magnetic mass and at least one intermediate part (13, 14) between the two end-parts, each end-part and the intermediate part comprising a bottom part (15, 16) and cooling parts (17, 18),
- the bottom part (15, 16) resting at the bottom of the slot (7) and comprising a sub-supply channel (19, 20),
- each cooling part (17, 18) comprising at least one extraction duct (21, 22) in the radial direction at a first end of the cooling part and a cooling channel (23, 24) extending in an axial direction between the extraction duct and the second end of the cooling part, the cooling channel being supplied with cooling fluid at the second end of the cooling part,
- the cooling parts (18) of the intermediate part (13, 14) further comprising a supply duct (25) at the second end of the cooling part supplying the cooling channel,
the cooling parts (17, 18) of each end-part and of each intermediate part being stacked above the bottom part (15, 16) and on top of each other in the radial direction so that the extraction ducts form a extraction vent (26, 27), the supply ducts of the intermediate part form a supply vent (25) and the sub-supply channels (19, 20) form a supply channel (29) extending along the magnetic mass in the axial direction and configured to supply the supply vents with cooling fluid, the extraction vents being configured to extract the cooling fluid outside the cooling channels through the wedge (8).

2. Magnetic mass according to claim 1, in which the separator (9) is made of an electric insulating material.

3. Magnetic mass according to claim 1 or 2, in which each wedge (8) comprises holes (30) in front of the extraction vents (26, 27) so that cooling fluid flows outside of the magnetic mass (5) through the extraction vents and the holes.

4. Magnetic mass according to any one of claims 1 to 3, comprising two intermediate parts (13, 14) between the two end-parts (12), the extraction vent (27) of a first intermediate part (13) being adjacent to the supply vent of the second intermediate part (14).

5. Magnetic mass according to claim 4, in which the length in the axial direction of the first intermediate part (13) and the length in the axial direction of the second intermediate part (14) are not identical.

6. Magnetic mass according to any of claims 1 to 5, in which the bottom part (15, 16) and each cooling part (17, 18) are unitary parts fixed together with fixing means.

7. Magnetic mass according to claim 6, in which the fixing means comprise lugs (32) and fixing apertures (33) configured to house lugs, each end of the bottom part (15, 16) comprising a fixing aperture and each cooling part (17, 18) comprising at each end on a first surface (S1) lugs and at each end on the second surface (S2) opposite to the first surface fixing apertures, the lugs of one cooling part cooperating with the fixing aperture of the adjacent cooling part or of the adjacent bottom part.

8. Magnetic mass according to any of claims 1 to 7, in which each cooling part (17, 18) is formed by two distant parallel surfaces (S1, S2) in the axial direction joined by staggered beams (34).

9. Magnetic mass according to any of claims 1 to 8, in which each bottom part (15, 16) comprises a groove (31), the bottom part resting at the bottom of the slot (7) so that the groove and the bottom of the slot form the sub-supply channel (20).

10. Rotor (3) for a rotating electric machine comprising a shaft (4), and a magnetic mass (5) according to any of claims 1 to 9 mounted on the shaft, the two concentric winding heads (35, 36) of the two concentric windings (10, 11) extending outside the magnetic mass so that a gap (GAP) is formed between the winding heads and the shaft, the rotor further comprising supporting means for supporting the winding heads, the two concentric winding heads and the supporting means forming a winding head cooling channel (37) between the two concentric winding heads, the surface of the winding head cooling channel opposite to the shaft being hermetically sealed, each winding head cooling channel supplying one separator with cooling fluid.

11. Rotor according to claim 10, in which each winding head cooling channel (37) supplies the cooling channels (23) and the sub-supply channel (19) of one end-part (12).

12. Rotor according to claim 10 or 11, in which the supporting means comprise a retaining ring (6) and compensation means (38), the retaining ring surrounding each winding head cooling channel (37) and the compensation means being disposed between the retaining ring and each winding head (35, 36) so that the surface of the winding head cooling channel opposite to the shaft is hermetically sealed.

13. Rotor according to claim 10 or 11, in which the supporting means comprise a cross beam (6a) and a retaining bandage, the cross beam being disposed between the winding heads (35, 36) and the shaft to support the winding heads and the retaining bandage surrounding the winding heads so that the surface of the winding head cooling channel (37) opposite to the shaft is hermetically sealed.

14. Rotating electric machine (1) comprising a rotor (3) according to any of claims 10 to 13.

## Patentansprüche

1. Magnetmasse (5) für einen Rotor (3), der auf einem Durchmesser der Magnetmasse angeordnete Schlitze (7) umfasst, die sich entlang der Magnetmasse in axialer Richtung erstrecken und in radialer Richtung nach außen zusammenlaufen, wobei jeder Schlitz durch einen Keil (8) verschlossen ist, wobei jeder Schlitz mindestens einen sich in radialer Richtung erstreckenden Separator (9) und zwei konzentrische Wicklungen (10, 11) beherbergt, die durch den Separator in Umfangsrichtung voneinander getrennt sind, wobei der Separator so eingerichtet ist, dass er ein Kühlmittel in den Schlitz leitet, um die konzentrischen Wicklungen zu kühlen, wobei der Keil so eingerichtet ist, dass Kühlmittel durch den Keil aus dem Separator entweicht und verhindert, dass sich die konzentrischen Wicklungen und der Separator in dem Schlitz bewegen, **dadurch gekennzeichnet, dass** der Separator (9) an jedem Ende der Magnetmasse ein Endteil (12) und mindestens ein Zwischenteil (13, 14) zwischen den beiden Endteilen umfasst, wobei jedes Endteil und das Zwischenteil ein Unterteil (15, 16) und Kühlteile (17, 18) umfasst,
- wobei der untere Teil (15, 16) am Boden des Schlitzes (7) aufliegt und einen Unter-Versorgungskanal (19, 20) umfasst,
- wobei jedes Kühlteil (17, 18) mindestens einen Absaugkanal (21, 22) in radialer Richtung an einem ersten Ende des Kühlteils und einen Kühlkanal (23, 24) umfasst, der sich in axialer Richtung zwischen dem Absaugkanal und dem zweiten Ende des Kühlteils erstreckt, wobei der Kühlkanal am zweiten Ende des Kühlteils mit Kühlmittel versorgt wird,
- wobei die Kühlteile (18) des Zwischenteils (13, 14) ferner einen Versorgungskanal (25) am zweiten Ende des Kühlteils umfassen, der den Kühlkanal versorgt,
wobei die Kühlteile (17, 18) jedes Endteils und jedes Zwischenteils oberhalb des Unterteils (15, 16) und in radialer Richtung übereinander gestapelt sind, so dass die Absaugkanäle eine Absaugöffnung (26, 27) bilden, die Versorgungskanäle des Zwischenteils eine Versorgungsöffnung (25) bilden und die Unter-Versorgungskanäle (19, 20) einen Versorgungskanal (29) bilden, der sich entlang der Magnetmasse in axialer Richtung erstreckt und so eingerichtet ist, dass er die Versorgungsöffnungen mit Kühlmittel versorgt, wobei die Absaugöffnungen so eingerichtet sind, dass sie das Kühlmittel außerhalb der Kühlkanäle durch den Keil (8) absaugen.

2. Magnetmasse nach Anspruch 1, wobei der Separator (9) aus einem elektrisch isolierenden Material besteht.

3. Magnetmasse nach Anspruch 1 oder 2, wobei jeder Keil (8) Löcher (30) vor den Absaugöffnungen (26, 27) aufweist, so dass Kühlmittel außerhalb der Magnetmasse (5) durch die Absaugöffnungen und die Löcher fließt.

4. Magnetmasse nach einem der Ansprüche 1 bis 3, umfassend zwei Zwischenteile (13, 14) zwischen den beiden Endteilen (12), wobei die Absaugöffnung (27) eines ersten Zwischenteils (13) an die Versorgungsöffnung des zweiten Zwischenteils (14) angrenzend ist.

5. Magnetmasse nach Anspruch 4, wobei die Länge in axialer Richtung des ersten Zwischenteils (13) und die Länge in axialer Richtung des zweiten Zwischenteils (14) nicht identisch sind.

6. Magnetmasse nach einem der Ansprüche 1 bis 5, wobei der untere Teil (15, 16) und jedes Kühlteil (17, 18) mit Befestigungsmitteln zusammen befestigte Einheitsteile sind.

7. Magnetmasse nach Anspruch 6, wobei die Befestigungsmittel Ösen (32) und Befestigungsöffnungen (33) umfassen, die so eingerichtet sind, dass sie Ösen aufnehmen, wobei jedes Ende des unteren Teils (15, 16) eine Befestigungsöffnung umfasst und jedes Kühlteil (17, 18) an jedem Ende an einer ersten Oberfläche (S1) Ösen und an jedem Ende an der zweiten Oberfläche (S2) gegenüber den Befestigungsöffnungen der ersten Oberfläche umfasst, wobei die Ösen eines Kühlteils mit der Befestigungsöffnung des benachbarten Kühlteils oder des benachbarten unteren Teils zusammenwirken.

8. Magnetmasse nach einem der Ansprüche 1 bis 7, wobei jedes Kühlteil (17, 18) durch zwei voneinander entfernte parallele Oberflächen (S1, S2) in axialer Richtung gebildet ist, die durch versetzte Strahlen (34) verbunden sind.

9. Magnetmasse nach einem der Ansprüche 1 bis 8, wobei jeder untere Teil (15, 16) eine Nut (31) umfasst, wobei der untere Teil am Boden des Schlitzes (7) aufliegt, sodass die Nut und der Boden des Schlitzes den Unter-Versorgungskanal (20) bilden.

10. Rotor (3) für eine rotierende elektrische Maschine, umfassend eine Welle (4) und eine Magnetmasse (5) nach einem der Ansprüche 1 bis 9, die auf der Welle montiert ist, wobei sich die beiden konzentrischen Wicklungsköpfe (35, 36) der beiden konzentrischen Wicklungen (10, 11) außerhalb der Magnetmasse erstrecken, sodass ein Spalt (GAP) zwischen den Wicklungsköpfen und der Welle gebildet wird, wobei der Rotor ferner Stützmittel zum Abstützen der Wicklungsköpfe umfasst, wobei die beiden konzentrischen Wicklungsköpfe und die Stützmittel einen Wicklungskopf-Kühlkanal (37) zwischen den beiden konzentrischen Wicklungsköpfen bilden, wobei die Oberfläche des der Welle gegenüberliegenden Wicklungskopf-Kühlkanals hermetisch abgedichtet ist, wobei jeder Wicklungskopf-Kühlkanal einen Separator mit Kühlmittel versorgt.

11. Rotor nach Anspruch 10, wobei jeder Wicklungskopf-Kühlkanal (37) die Kühlkanäle (23) und den Unter-Versorgungskanal (19) eines Endteils (12) versorgt.

12. Rotor nach Anspruch 10 oder 11, wobei die Stützmittel einen Haltering (6) und Kompensationsmittel (38) umfassen, wobei der jeden Wicklungskopf-Kühlkanal (37) umgebende Haltering und das Kompensationsmittel zwischen dem Haltering und jedem Wicklungskopf (35, 36) so angeordnet sind, dass die der Welle gegenüberliegende Oberfläche des Wicklungskopf-Kühlkanals hermetisch abgedichtet ist.

13. Rotor nach Anspruch 10 oder 11, wobei die Stützmittel einen Querträger (6a) und eine Haltebandage umfassen, wobei der Querträger zwischen den Wicklungsköpfen (35, 36) und der Welle angeordnet ist, um die Wicklungsköpfe und die die Wicklungsköpfe umgebende Haltebandage zu stützen, so dass die der Welle gegenüberliegende Oberfläche des Wicklungskopf-Kühlkanals (37) hermetisch abgedichtet ist.

14. Elektrische Drehmaschine (1), die einen Rotor (3) nach einem der Ansprüche 10 bis 13 umfasst.

## Revendications

1. Masse magnétique (5) pour rotor (3) comprenant des fentes (7) disposées sur un diamètre de la masse magnétique, s'étendant le long de la masse magnétique selon une direction axiale et débouchant vers l'extérieur selon une direction radiale, chaque fente étant fermée par une cale (8), chaque fente logeant au moins un séparateur (9) s'étendant dans la direction radiale et deux enroulements concentriques (10, 11) séparés par le séparateur selon une direction circonférentielle, le séparateur étant configuré pour canaliser un fluide de refroidissement dans ladite fente afin de refroidir les enroulements concentriques, la cale étant configurée de manière à ce que le fluide de refroidissement s'échappe du séparateur à travers la cale et de manière à empêcher les enroulements concentriques et le séparateur de se déplacer dans la fente, **caractérisée en ce que** le séparateur (9) comprend une partie d'extrémité (12) à chaque extrémité de la masse magnétique et au moins une partie intermédiaire (13, 14) entre les deux parties d'extrémité, chaque partie d'extrémité et la partie intermédiaire comprenant une partie de fond (15, 16) et des parties de refroidissement (17, 18),
- la partie de fond (15, 16) reposant au fond de la fente (7) et comprenant un sous-canal d'alimentation (19, 20),
- chaque partie de refroidissement (17, 18) comprenant au moins un conduit d'extraction (21, 22) dans la direction radiale à une première extrémité de la partie de refroidissement et un canal de refroidissement (23, 24) s'étendant selon une direction axiale entre le conduit d'extraction et la seconde extrémité de la partie de refroidissement, le canal de refroidissement étant alimenté en fluide de refroidissement à la seconde extrémité de la partie de refroidissement,
- les parties de refroidissement (18) de la partie intermédiaire (13, 14) comprenant en outre un conduit d'alimentation (25) à la seconde extrémité de la partie de refroidissement alimentant le canal de refroidissement,
les parties de refroidissement (17, 18) de chaque partie d'extrémité et de chaque partie intermédiaire étant empilées au-dessus de la partie de fond (15, 16) et les unes sur les autres selon la direction radiale de sorte que les conduits d'extraction forment un évent d'extraction (26, 27), les conduits d'alimentation de la partie intermédiaire forment un évent d'alimentation (25) et les sous-canaux d'alimentation (19, 20) forment un canal d'alimentation (29) s'étendant le long de la masse magnétique selon la direction axiale et configuré pour alimenter les évents d'alimentation en fluide de refroidissement, les évents d'extraction étant configurés pour extraire le fluide de refroidissement à l'extérieur des canaux de refroidissement à travers la cale (8).

2. Masse magnétique selon la revendication 1, dans laquelle le séparateur (9) est constitué d'un matériau isolant électrique.

3. Masse magnétique selon la revendication 1 ou 2, dans laquelle chaque cale (8) comprend des trous (30) devant les évents d'extraction (26, 27) de sorte que du fluide de refroidissement s'écoule à l'extérieur de la masse magnétique (5) à travers les évents d'extraction et les trous.

4. Masse magnétique selon l'une quelconque des revendications 1 à 3, comprenant deux parties intermédiaires (13, 14) entre les deux parties d'extrémité (12), l'évent d'extraction (27) d'une première partie intermédiaire (13) étant adjacent à l'évent d'alimentation de la seconde partie intermédiaire (14).

5. Masse magnétique selon la revendication 4, dans laquelle la longueur dans la direction axiale de la première partie intermédiaire (13) et la longueur dans la direction axiale de la seconde partie intermédiaire (14) ne sont pas identiques.

6. Masse magnétique selon l'une quelconque des revendications 1 à 5, dans laquelle la partie de fond (15, 16) et chaque partie de refroidissement (17, 18) sont des parties unitaires fixées ensemble avec des moyens de fixation.

7. Masse magnétique selon la revendication 6, dans laquelle les moyens de fixation comprennent des pattes (32) et des orifices de fixation (33) configurés pour loger les pattes, chaque extrémité de la partie de fond (15, 16) comprenant un orifice de fixation et chaque partie de refroidissement (17, 18) comprenant à chaque extrémité, sur une première surface (S1), des pattes et à chaque extrémité, sur la seconde surface (S2) opposée à la première surface, des orifices de fixation, les pattes d'une partie de refroidissement coopérant avec l'orifice de fixation de la partie de refroidissement adjacente ou de la partie de fond adjacente.

8. Masse magnétique selon l'une quelconque des revendications 1 à 7, dans laquelle chaque partie de refroidissement (17, 18) est formée par deux surfaces parallèles distantes (S1, S2) dans la direction axiale, reliées par des poutres décalées (34).

9. Masse magnétique selon l'une quelconque des revendications 1 à 8, dans laquelle chaque partie de fond (15, 16) comprend une rainure (31), la partie de fond reposant au fond de la fente (7) de sorte que la rainure et le fond de la fente forment le sous-canal d'alimentation (20).

10. Rotor (3) pour une machine électrique tournante comprenant un arbre (4), et une masse magnétique (5) selon l'une quelconque des revendications 1 à 9 montée sur l'arbre, les deux têtes d'enroulement concentrique (35, 36) des deux enroulements concentriques (10, 11) s'étendant à l'extérieur de la masse magnétique de sorte qu'un espace (GAP) soit formé entre les têtes d'enroulement et l'arbre, le rotor comprenant en outre des moyens de support pour supporter les têtes d'enroulement, les deux têtes d'enroulement concentrique et les moyens de support formant un canal de refroidissement de tête d'enroulement (37) entre les deux têtes d'enroulement concentrique, la surface du canal de refroidissement de tête d'enroulement opposée à l'arbre étant hermétiquement scellée, chaque canal de refroidissement de tête d'enroulement alimentant un séparateur en fluide de refroidissement.

11. Rotor selon la revendication 10, dans lequel chaque canal de refroidissement de tête d'enroulement (37) alimente les canaux de refroidissement (23) et le sous-canal d'alimentation (19) d'une partie d'extrémité (12).

12. Rotor selon la revendication 10 ou 11, dans lequel les moyens de support comprennent un anneau de retenue (6) et des moyens de compensation (38), l'anneau de retenue entourant chaque canal de refroidissement de tête d'enroulement (37) et les moyens de compensation étant disposés entre l'anneau de retenue et chaque tête d'enroulement (35, 36) de sorte que la surface du canal de refroidissement de tête d'enroulement opposée à l'arbre soit hermétiquement scellée.

13. Rotor selon la revendication 10 ou 11, dans lequel les moyens de support comprennent une traverse (6a) et un bandage de retenue, la traverse étant disposée entre les têtes d'enroulement (35, 36) et l'arbre pour supporter les têtes d'enroulement, et le bandage de retenue entourant les têtes d'enroulement de sorte que la surface du canal de refroidissement de tête d'enroulement (37) opposée à l'arbre soit hermétiquement scellée.

14. Machine électrique tournante (1) comprenant un rotor (3) selon l'une quelconque des revendications 10 à 13.
